Europäisches Patentamt

European Patent Office

Office européen des brevets

(11) Veröffentlichungsnummer: **0 394 444**
**A1**

## EUROPÄISCHE PATENTANMELDUNG
### veröffentlicht nach Art. 158 Abs. 3 EPÜ

(21) Anmeldenummer: 89900682.9

(22) Anmeldetag: 29.09.88

(86) Internationale Anmeldenummer:
PCT/SU88/00193

(87) Internationale Veröffentlichungsnummer:
WO 90/03238 (05.04.90 90/08)

(51) Int. Cl.⁵: **B23B 51/02**

(43) Veröffentlichungstag der Anmeldung:
**31.10.90 Patentblatt 90/44**

(84) Benannte Vertragsstaaten:
**AT CH DE FR GB IT LI SE**

(71) Anmelder: **BELORUSSKY POLITEKHNICHESKY INSTITUT**
Leninksy pr., 65
**Minsk, 220027(SU)**

(72) Erfinder: **LYSENKO, Viktor Grigorievich**
pr. Masherova, 47-1-278
**Minsk, 220035(SU)**
Erfinder: **JUDOVIN, Lev Grigorievich**
ul. Uralskaya, 10-26
**Minsk, 220037(SU)**

(74) Vertreter: **Patentanwälte Zellentin & Partner**
Zweibrückenstrasse 15
**D-8000 München 2(DE)**

(54) **SPIRALBOHRER ZUM BOHREN VON TIEFEN BOHRLÖCHERN.**

㉗ Der Spiralbohrer zum Bohren von tiefen Bohrlöchern besteht aus einem Schneidteil, Führungsfasen (2) und zur Spanbeförderung bestimmten Spannuten (3). Die vordere Wand (4) der Spannut (3) setzt sich aus zwei einander zugeordneten Abschnitten (7, 8) zusammen. Der erste Abschnitt (7), der sich mit der Führungsfase (2) schneidet, bildet mit der Erzeugenden (9) der zylindrischen Außenfläche des Spiralbohrers einen Winkel (4) kleiner als 90°. Der Winkel (δ) der Neigung einer Tangente, die durch den Zuordnungspunkt des ersten und des zweiten Abschnittes (7, 8) der vorderen Wand (4) geht, zur Erzeugenden (9) der zylindrischen Außenfläche des Spiralbohrers wird gemäß folgender Abhängigkeit gewählt:

$$125° > \delta > (57° - \omega).K + 90°,$$

worin ω den Steigungswinkel der Spannut (3) zur Spiralbohrerachse im betrachteten Punkt bedeutet und K = 1,4 bis 2,1 ist.

FIG. 1

FIG. 2

SPIRALBOHRER ZUM BOHREN VON TIEFEN BOHRLÖCHERN

Technisches Gebiet

Die vorliegende Erfindung bezieht sich auf das Gebiet der spanenden Formung von Metallen und anderen Werkstoffen, insbesondere betrifft sie Spiralbohrer zum Bohren von tiefen Bohrlöchern.

Eine der am meisten verbreiteten Arbeitsoperationen in der Metallbearbeitung ist das Bohren. Meist kennzeichnen sich diese Arbeitsoperationen durch niedrige Leistung und beträchtlichen Werkzeugverbrauch. Etwa 30 % von zur Zeit hergestellten mit Schneiden versehenen Werkzeugen sind Bohrer. Besonders niedrig ist die Leistung bei der Bearbeitung von Bohrungen mit einer Tiefe über zehn Durchmesser, d.h. von tiefen Bohrlöchern. Daher besteht gegenwärtig das Problem einer Leistungsteigerung bei der Bearbeitung derartiger Bohrlöcher.

Es ist ein Spiralbohrer zum Bohren von tiefen Löchern bekannt, der aus einem Schneidteil, Führungsfasen und zum Spanablauf bestimmten Spannuten (im weiteren als Drallnuten bezeichnet) besteht (SU - A - 701743). Jede Drallnut ist durch eine unter einem Winkel zur Spiralbohrerachse angeordnete, in bezug auf die Spanbeförderungsrichtung vordere Wand gebildet, die mit einem Grund gekoppelt ist, welcher zur Spiralbohrerachse parallel liegt und mit einer hinteren Wand gekoppelt ist.

Der bekannte Spiralbohrer gestattet es, Bohrlöcher mit einer Tiefe bis 50 Durchmesser herzustellen, ohne den Spiralbohrer periodisch herausführen zu müssen, was einem vergrößerten Steigungswinkel der Drallnut ( $\omega = 45^{\circ} - 60^{\circ}$ ) und der Neigung der vorderen Wand der Drallnut zur Spiralbohrerachse um einen Winkel $\delta$ größer als $90^{\circ}$ zu verdanken ist, wobei die vordere Wand geradlinig ausgeführt ist. Die Leistung bei der Bearbeitung von tiefen Bohrlöchern mittels dieses Spiralbohrers

- 2 -

ist gegenüber den weit verbreiteten Spiralbohrern, die zur Herstellung tiefer Bohrlöcher eingesetzt werden, höher. Die Kombination der richtig gewählten drei konstruktiven Parameter, d.h. der rationellen Abmessungen, der Form und des Steigungswinkels der Drallnuten, führte nicht nur zur Beseitigung der Notwendigkeit, den Spiralbohrer periodisch herauszuführen, sondern auch zu einer beträchtlichen Erhöhung der Torsionssteifigkeit des Spiralbohrers. Dies erklärt sich dadurch, daß es bei der Gewährleistung eines zuverlässigen Spanabtransports aus dem zu bearbeitenden Loch möglich wurde, die Abmessungen der Drallnuten bedeutend zu verringern und den Durchmesser der Seele zu vergrößern, weil kein großes Volumen der Drallnuten für die Späneansammlung erforderlich ist. Der bekannte Spiralbohrer besitzt eine verhältnismäßig hohe Steifigkeit in Kombination mit einer zuverlässigen Spanbeförderung. Dies ist durch eine Verringerung des Steigungswinkels $\omega$ der Drallnuten dank der Einführung des Winkels $\delta$ der Neigung der vorderen Wand erreicht. Das Auftreten einer Kraft, die das Spanstück an die Lochwandung andrückt, ermöglichte es, die Spanabführungsbedingungen zu verbessern.

Aber in Anbetracht dessen, daß die vordere Wand der Drallnut über die gesamte Höhe ein und denselben Neigungswinkel zur Spiralbohrerachse hat, sind die Bedingungen der Spanabfuhr auf der gesamten Wandlänge ungleich. So ist die Neigung im mittleren Teil der Drallnut im Bereich des Kontaktes mit größeren Spanstücken und -locken günstig, da sie die Bedingungen der Spanbeförderung verbessert. Eine ebensolche Neigung an der Peripherie der Drallnut an der Kontaktstelle mit den staubförmigen Teilchen und kleinen Bruchstücken der Späne ist schädlich, weil sie die Arbeitsbedingungen des bekannten Bohrers verschlechtert und eine Senkung seiner Standzeit zur Folge hat. Dies hängt damit zusammen, daß im Querschnitt des Spiralbohrers die vorde-

- 3 -

re Wand dieser Drallnut in der Nähe der Peripherie durch eine konvexe Kurve - eine Konvolute - gebildet ist und im Schnittpunkt mit der Führungsfase einen stumpfen Winkel bildet. Dies führt zur Klemmung kleiner und staubförmiger Spanteilchen im Spalt zwischen Bohrer und Loch, zum Anhaften an den Führungsfasen sowie zur Senkung der Standzeit des Spiralbohrers und zur Zunahme des erforderlichen/Drehmomentes.

Der vorliegenden Erfindung liegt die Aufgabe zugrunde, einen Spiralbohrer zum Bohren von tiefen Bohrlöchern mit einer solchen konstruktiven Ausführung von Drallnuten zu schaffen, die eine zuverlässige Spanbeförderung in Kombination mit einer größtmöglichen Torsionssteifigkeit des Spiralbohrers gewährleistet und das Anhaften des zu bearbeitenden Werkstoffes an den Führungsfasen ausschließt.

Die gestellte Aufgabe wird dadurch gelöst, daß beim Spiralbohrer zum Bohren von tiefen Bohrlöchern, bestehend aus einem Schneidteil, Führungsfasen und zur Spanbeförderung bestimmten Drallnuten, von denen jede durch eine unter einem Winkel zur Spiralbohrerachse angeordnete, in bezug auf die Spanbeförderungsrichtung vordere Wand gebildet ist, die mit einem Grund gekoppelt ist, welcher zur Spiralbohrerachse parallel liegt und mit einer hinteren Wand gekoppelt ist, erfindungsgemäß sich die vordere Wand aus zwei einander zugeordneten Abschnitten zusammensetzt, von denen der erste, der sich mit der Führungsfase schneidet, mit der Erzeugenden der zylindrischen Außenfläche des Spiralbohrers einen Winkel kleiner als 90° einschließt, und der Winkel der Neigung einer Tangente, die durch den Zuordnungspunkt des ersten und des zweiten Abschnitts der vorderen Wand geht, zur Erzeugenden der zylindrischen Außenfläche des Spiralbohrers gemäß folgender Abhängigkeit gewählt wird:

$$125° > \delta > (57° - \omega) \cdot K + 90°,$$

- 4 -

worin $\omega$ den Steigungswinkel der Drallnut zur Spiralbohrerachse im betrachteten Punkt bedeutet und K = 1,4 - 2,1 ist.

Es ist vorteilhaft, daß die Länge $\ell$ der Projektion des ersten Abschnitts auf eine zur Spiralbohrerachse senkrechte Ebene 0,05 - 0,3 mal der Tiefe $h$ der Drallnut beträgt.

Dies verhindert die Klemmung kleiner Spanteilchen im Spalt zwischen Spiralbohrer und Lochwandung, wobei die transportierenden Eigenschaften der Drallnut nicht beeinträchtigt werden.

Es ist erforderlich, die Steigung der Drallnut nach der Formel zu wählen:

$$P = (2 - 2,6)\, d,$$

worin d den Durchmesser des Spiralbohrers bedeutet.

Dies gewährleistet eine zuverlässige Spanbeförderung aus dem zu bearbeitenden Bohrloch unter Beibehaltung einer verhältnismäßig hohen Steifigkeit des Spiralbohrers.

Der gemäß der vorliegenden Erfindung ausgeführte Spiralbohrer zum Bohren von tiefen Bohrlöchern gewährleistet einen kontinuierlichen Abtransport der anfallenden Späne aus dem zu bearbeitenden Bohrloch, wodurch es möglich wird, tiefe Löcher in einem Durchgang zu bohren, ohne diesen Bohrer periodisch herausführen zu müssen. Dieser Bohrer weist eine erhöhte Torsionssteifigkeit auf, was die Anwendung erhöhter Zerspanungswerte zuläßt. Die erfindungsgemäße Ausführung des Spiralbohrers kann an beliebigen Werkzeugmaschinen zur Bearbeitung von Bohrlöchern angewendet werden, ohne daß eine Modernisierung dieser Maschinen in Frage käme. Außerdem unterscheidet sich die Herstellungstechnologie des erfindungsgemäß ausgeführten Spiralbohrers praktisch nicht von der Herstellungstechnologie bekannter Spiralbohrer.

Nachstehend wird ein konkretes Ausführungsbeispiel der vorliegenden Erfindung unter Hinweis auf Zeichnungen beschrieben . Es zeigt:

Fig. 1 eine Gesamtansicht des erfindungsgemäßen Spiralbohrers zum Bohren von tiefen Bohrlöchern;

Fig. 2 in einem Schnitt nach Linie II-II der Fig. 1 das Schema der Kräftewirkung auf ein Spanstück.

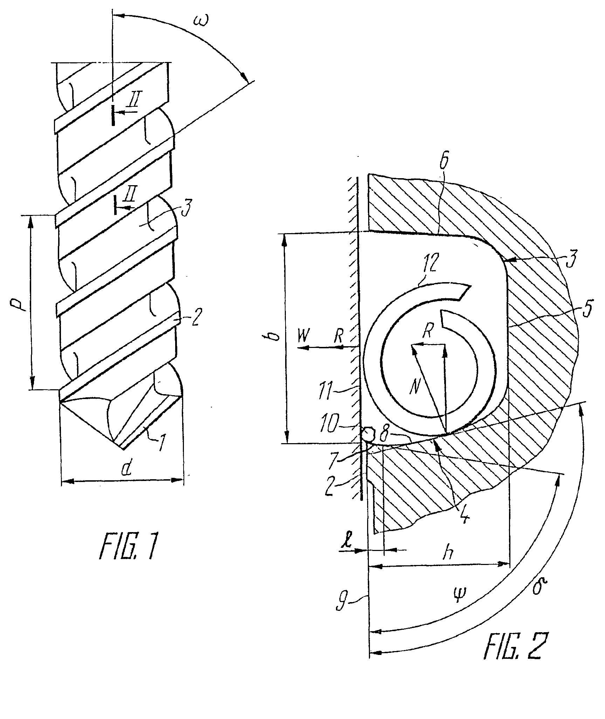

Der Spiralbohrer zum Bohren von tiefen Bohrlöchern besteht aus einem Schneidteil 1 (Fig. 1), Führungsfasen 2 und zur Spanbeförderung bestimmten Drallnuten 3.

Jede Drallnut 3 ist durch eine unter einem Winkel $\delta$ (Fig. 2) zur Spiralbohrerachse angeordnete vordere Wand 4 gebildet, die mit einem Grund 5 gekoppelt ist, welcher zur Spiralbohrerachse parallel liegt und mit einer hinteren Wand 6 gekoppelt ist.

Die vordere Wand 4 setzt sich aus zwei einander zugeordneten Abschnitten 7, 8 zusammen. Der erste Abschnitt 7 schneidet sich mit der Führungsfase 2 und schließt mit einer Erzeugenden 9 der zylindrischen Außenfläche des Spiralbohrers einen Winkel $\psi < 90°$ ein. Die Länge der Projektion des ersten Abschnittes 7 der vorderen Wand 4 auf eine zur Spiralbohrerachse senkrechte Ebene beträgt 0,05 - 0,3 der Tiefe h der Drallnut 3. Dank dieser geometrischen Parameter des ersten Abschnittes 7 entsteht am Umfang des Bohrers im Querschnitt eine Zuspitzung, und die Normaldruckkraft N ist so gerichtet, daß sie feine Spanteilchen 10 von einer Lochwandung 11 ablöst und deren Klemmung im Spalt zwischen Spiralbohrer und Lochwandung 11 verhindert. Die Zuspitzung im Übergangspunkt der vorderen Wand 4 der Drallnut 3 in die Führungsfase 2 erhöht die Standzeit des Spiralbohrers um das Mehrfache im Vergleich mit Spiralbohrern, welche in diesem Punkt einen Winkel $\psi > 90°$ haben. Wenn das Maß des ersten Abschnittes 7, in welchem die Zuspitzung erzeugt ist, zu klein ist, das heißt mit den Abmessungen der staubförmigen und feinen Spanteilchen 10 vergleichbar ist, so sinkt die Standzeit des Spiralbohrers infolge des Anhaftens dieser Spanteilchen 10 an den Führungsfasen 2. Die Ausführung dieses Abschnittes kleiner als 0,05 der Tiefe h der Drallnut ist unrationell. Übersteigt das Maß des ersten Abschnittes 7 0,3 der Tiefe h der Drallnut, so kontaktieren mittlere und größere Spanstücke 12 mit der vorderen Wand 4 in den Punkten, wo die Radialkomponente R der Normaldruckkraft N zu klein ist oder nach der Seite der Bohrerachse hin gerichtet ist, was eine Beeinträchtigung der transportierenden Eigenschaften der Drallnuten 3 bewirkt.

Der zweite Abschnitt 8, der mit dem Grund 5 der Drallnut 3 gekoppelt ist, wird so ausgeführt, daß der Winkel $\delta$ der Neigung einer Tangente, die durch den Zuordnungspunkt des ersten Abschnittes 7 und des zweiten Abschnittes 8 der vorderen Wand 4 geht, zur Erzeugenden 9 der zylindrischen Außenfläche des Spiralbohrers ausgehend von der Abhängigkeit gewählt wird:

$$125 > \delta > (57° - \omega) \cdot K + 90°,$$

worin $\omega$ (Fig. 1) den Steigungswinkel der Drallnut 3 zur Spiralbohrerachse im betrachteten Punkt bedeutet und K = 1,4 - 2,1 ist.

Der Winkel $\delta$ (Fig. 2) führt zur Entstehung einer Radialkomponente der Normaldruckkraft N, mit welcher der Spiralbohrer auf das Spanstück 12 einwirkt. Der Vektor der Radialkomponente R, der sich mit dem Vektor einer Fliehkraft W addiert, drückt das Spanstück 12 an die Lochwandung 11 an, was zum Ansteigen der Kraft der Reibung von Spänen an der Wandung des zu bearbeitenden Bohrlochs und folglich zur Verbesserung der Beförderungsbedingungen führt. Bei der Zunahme des Winkels $\delta$ von 90 auf 120° werden die Bedingungen der Spanbeförderung verbessert. Bei $\delta > 125°$ treten negative Erscheinungen auf, d.h., die Kraft N des Drucks der Späne auf die Lochwandungen 11 steigt bis zu einer solchen Größe an, daß beim Bohren von Stählen, Gußeisen und anderen Konstruktionswerkstoffen an den Lochwandungen 11 von der Einwirkung der Späne herrührende Ringnuten gebildet werden, und als Folge davon wird die Spanbeförderung beeinträchtigt.

Experimentell wurde festgestellt, daß es beim Fehlen einer Neigung der vorderen Wand 4 zur Gewährleistung einer zuverlässigen Spanabfuhr erforderlich ist, daß der Steigungswinkel $\omega$ (Fig. 1) der Drallnuten 3 zur Achse 57° - 62° beträgt. Die Neigung der vorderen Wand 4 (Fig. 2) gestattet es, eine zuverlässige Spanbeförderung bei der Verkleinerung des Winkels $\omega$ auf 52 - 54° sicherzustellen. Dies führt zur Zunahme der Steifigkeit des Spiralbohrers, da die Steifigkeit mit dem Winkel $\omega$ zusammenhängt.

Dadurch, daß sich die Späne in den Drallnuten 3 des Bohrers nicht ansammeln, ist die Möglichkeit gegeben, die Abmessungen dieser Drallnuten 3 zu verringern, was zu einer zusätzlichen Erhöhung der Steifigkeit des Spiralbohrers führt. Die Breite b der Drallnut 3 am Umfang des Spiralbohrers ist verringert und beträgt (0,2 - 0,3)P, wo P (Fig. 1) die Steigung der Drallnut 3 bedeutet. Die Steigung P der Spirale ist ausgehend von den Bedingungen einer kontinuierlichen Spanbeförderung gewählt. Bei einer Bohrtiefe über 50 Durchmesser und bei einem Winkel $\delta$ = 95 - 125° wird die Steigung der Spirale ausgehend von der Bedingung P = (2 - 2,6)d gewählt, worin d den Bohrerdurchmesser bedeutet. Bei einer kleineren Steigung P der Spirale (bei einem größere Winkel $\omega$ ) nimmt die Steifigkeit des Spiralbohrers ab, und bei P > 2,6d wird die Spanbeförderung beeinträchtigt.

Gewerbliche Anwendbarkeit

Am vorteilhaftesten ist die vorliegende Erfindung zum Bohren von tiefen Bohrlöchern in Teilen von Kraftfahrzeugen, Traktoren, hydraulischen Geräten anzuwenden.

- 8 -

PATENTANSPRÜCHE

1. Spiralbohrer zum Bohren von tiefen Bohrlöchern, bestehend aus einem Schneidteil (1), Führungsfasen (2) und zur Spanbeförderung bestimmten Spannuten (3), von denen jede durch eine unter einem Winkel zur Spiralbohrerachse angeordnete, in bezug auf die Spanbeförderungsrichtung vordere Wand (4) gebildet ist, die mit einem Grund (5) gekoppelt ist, welcher zur Spiralbohrerachse parallel liegt und mit einer hinteren Wand (6) gekoppelt ist, dadurch gekennzeichnet, daß sich die vordere Wand (4) aus zwei einander zugeordneten Abschnitten (7, 8) zusammensetzt, von denen der erste (7), der sich mit der Führungsfase (2) schneidet, mit der Erzeugenden (9) der zylindrischen Außenfläche des Spiralbohrers einen Winkel ( $\psi$ ) kleiner als $90^\circ$ einschließt, und der Winkel ( $\delta$ ) der Neigung einer Tangente, die durch den Zuordnungspunkt des ersten und des zweiten Abschnitts (7, 8) der vorderen Wand (4) geht, zur Erzeugenden (9) der zylindrischen Außenfläche des Spiralbohrers gemäß folgender Abhängigkeit gewählt wird:

$$125^\circ > \delta > (57^\circ - \omega) \cdot K + 90^\circ,$$

worin $\omega$ den Steigungswinkel der Spannut (3) zur Spiralbohrerachse im betrachteten Punkt bedeutet und $K = 1,4$ bis $2,1$ ist.

2. Spiralbohrer nach Anspruch 1, dadurch gekennzeichnet, daß die Länge ( $\ell$ ) der Projektion des ersten Abschnittes (7) auf eine zur Spiralbohrerachse senkrechte Ebene $0,05$ bis $0,3$ der Tiefe (h) der Spannut (3) beträgt.

3. Spiralbohrer nach Anspruch 1, dadurch gekennzeichnet, daß man die Steigung (P) der Spannut (3) nach der Formel

$$P = (2 \text{ bis } 2,6) \, d$$

wählt, worin d den Durchmesser des Spiralbohrers bedeutet.

FIG. 1

FIG. 2

# INTERNATIONAL SEARCH REPORT

International Application No PCT/SU 88/00193

## I. CLASSIFICATION OF SUBJECT MATTER (if several classification symbols apply, indicate all) 6

According to International Patent Classification (IPC) or to both National Classification and IPC

IPC$^4$    B23B 51/02

## II. FIELDS SEARCHED

### Minimum Documentation Searched 7

| Classification System | Classification Symbols |
|---|---|
| IPC$^4$ | B23B 51/02 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU, A1, 191313 (Z.I. Komissarova) 2 March 1967 (02.03.67) | 1 |
| A | SU, A1, 701743 (Belorussky politekhnichesky institut) 15 December 1979 (15.12.79) see the claims (cited in the description) | 1 |
| A | CH, A5, 629987 (HAWERA PROBST GMBH & CO) 28 May 1982 (28.05.82) see figures 3,4 | 1 |

------------

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 11 May 1989 (11.05.89) | 12 June 1989 (12.06.89) |

| International Searching Authority | Signature of Authorized Officer |
|---|---|
| ISA/SU | |

Form PCT/ISA/210 (second sheet) (January 1985)